# EUROPÄISCHE PATENTSCHRIFT

(11) **EP 1 034 979 B1**
(45) Veröffentlichungstag und Bekanntmachung des Hinweises auf die Patenterteilung: **04.12.2002**
(21) Anmeldenummer: 00104877.6
(22) Anmeldetag: 07.03.2000
(51) Int. Cl.: B60R 7/00, B60J 7/00

(54) **Hutablage für Fahrzeuge mit abklappbarem Verdeck**
Rear window shelf for vehicles with folding top
Plage arrière pour vehicules avec capote pliante

(30) Priorität: 09.03.1999 DE 19910228
(43) Veröffentlichungstag der Anmeldung: 13.09.2000
(73) Patentinhaber: CTS Fahrzeug-Dachsysteme GmbH, 21079 Hamburg (DE)
(72) Erfinder: Wagner, Tobias, 21149 Hamburg (DE)
(74) Vertreter: Müller, Gottfried

(56) Entgegenhaltungen:
- DE-A1- 3 607 944
- DE-A1- 19 616 972
- DE-C1- 4 445 580
- US-A- 4 351 555
- US-A- 4 489 660

## Beschreibung

Die Erfindung betrifft eine Hutablage für Fahrzeuge mit abklappbarem Verdeck gemäß dem Oberbegriff des Anspruches 1. Derartige Hutablagen sind allgemein bekannt.

Fahrzeuge mit abklappbarem Verdeck sind als Cabriolets oder Roadster bekannt, wobei das Verdeck als Faltverdeck oder als Hardtop ausgebildet sein kann. Im geöffneten Zustand ist es in einem sogenannten Verdeckkasten aufgenommen, der teils zwischen Innenraum des Fahrzeuges und Kofferraum liegt, teils, so insbesondere bei Hardtops, auch Teile des Kofferraumes beansprucht.

Ist das Verdeck in geschlossenem Zustand nicht auf einen Verdeckkastendeckel aufgesetzt, so bildet es beispielsweise im Anschluß an den Kofferraumdeckel im geschlossenen Zustand einen Teil der Abdeckung des Verdeckkastens, der gegen den Fahrzeuginnenraum zu von einer Hutablage überdeckt wird, die zum Öffnen und Schließen des Verdeckes aufgeklappt wird und die, bei in den Verdeckkasten abgesenktem, geöffnetem Verdeck, anschließend beispielsweise an den Kofferraumdeckel die verbleibende Öffnung des Verdeckkastens überdeckt. Lösungen dieser Art sind aus der Praxis bekannt.

Werden abklappbare Verdecke automatisiert und einschließlich der zugehörigen Verdeckkastenabdeckungen, wie beispielsweise auch Hutablagen in ihrem Ablauf so gesteuert, daß kein weiterer Eingriff einer Bedienungsperson erforderlich ist, so ergeben sich komplizierte Mechaniken und ein hoher Steuerungsaufwand.

Der Erfindung liegt die Aufgabe zugrunde, für Fahrzeuge mit abklappbarem Verdeck gemäß dem Oberbegriff des Anspruches 1 eine Steuerung für eine Hutablage zu schaffen, die sich durch ein einfaches Arbeitsprinzip auszeichnet und die dadurch in Verdecksteuerungen im Rahmen einer Gesamtkinematik zu integrieren ist. In die Verdecksteuerung integriert soll die Hutablage in Abstimmung auf die Kinematik des Verdeckes zwischen ihren den Endstellungen des Verdeckes - geschlossen und offen - entsprechenden Endstellung einen Bewegungsablauf haben, der sich konstruktiv einfach beherrschen läßt, bevorzugt den Einsatz eines gemeinsamen Stellantriebes ermöglicht, und insbesondere nicht zu Beeinträchtigungen der Verdecksteuerung führt.

Erreicht wird dies mit einer Hutablage gemäß dem Anspruch 1, wobei die der Hutablage zugeordneten Führungspunkte und Drehachsen eine Steuerung mit Bewegungsabläufen ermöglichen, die nicht zu Totpunkten neigt und bei der auf einen vom Antrieb für das Verdeck unabhängigen, eigenständigen Stellantrieb für die Hutablage gegebenenfalls verzichtet werden kann. Die erfindungsgemäße Lösung der Führung der Hutablage über zwei, bezogen auf eine liegende Hutabdeckung in Höhenrichtung beabstandete Führungspunkte, die abwechselnd als Drehachsen dienen, macht das Öffnen und Schließen der Hutablage bei gleichzeitiger Verlagerung in Längsrichtung mit einfachen Mitteln möglich, wobei der Antrieb für die Drehbewegungen und den Längsversatz bevorzugt in einfacher Weise über den Antrieb für die Verdeckführung erfolgen kann.

Die erfindungsgemäße Steuerung und Führung der Hutablage ist dann konstruktiv besonders einfach beherrschbar, wenn die Führungspunkte in ihrer Funktion als Drehachsen lagefeste Führungspunkte bilden, wobei sich die jeweils erforderlichen Dreh- und Versatzwege konstruktiv gut dadurch beeinflussen lassen, daß die Führungspunkte im Rahmen der Erfindung in Längsrichtung des Fahrzeuges gegeneinander versetzt angeordnet werden.

Bevorzugt bildet im Rahmen der Erfindung von den Führungspunkten, bezogen auf die erste, bei geschlossenem Verdeck gegebene Schließlage der Hutablage, der obere Führungspunkt einen ersten Führungspunkt, der in dieser ersten Schließlage der Hutablage in Richtung des Längsversatzes der Hutablage zwischen erster und zweiter Schließlage gegenüber dem zweiten, unteren Führungspunkt versetzt ist.

Diese Grundanordnung macht es möglich, ausgehend von der ersten Schließlage der Hutablage den ersten Führungspunkt zunächst als lagefeste Drehachse zu nutzen, um die der zweite Führungspunkt unter Öffnen des Deckels verschwenkt wird, wobei sich durch die Verschwenkung für den zweiten Führungspunkt gleichzeitig ein Versatz in Richtung des Längsversatzes der Hutablage zur zweiten Schließlage hin ergibt. Wird nunmehr der in Längsrichtung versetzte zweite Führungspunkt als lagefeste Drehachse genutzt, so ist mit der Schließbewegung für die Hutablage gleichzeitig ein Längsversatz derselben verbunden.

Da die Überführung des Verdeckes aus der geschlossenen Lage in die Ablagestellung eine Verlagerung des Verdeckes in der gleichen Richtung bedingt wie die Überführung der Hutablage von der ersten in die zweite Schließstellung, kann erfindungsgemäß die Bewegung des Verdeckes bzw. von dessen Führungslenkern mit einfachen mechanischen Mitteln genutzt werden, um die Führungspunkte der Hutablage koordiniert zu verlagern und entsprechende Drehbewegungen einzuleiten.

Insbesondere läßt sich die erfindungsgemäße Steuerung einer Hutablage in Verbindung mit Verdeckkonstruktionen vorteilhaft einsetzen, die eine viergelenkartige Verdeckführung aufweisen, bei der zwei karosseriefeste, in Längsrichtung des Fahrzeuges beäbstandete Drehachsen für zwei verschwenkbare und miteinander gekoppelte Führungslenker vorgesehen sind, wenn jedem der Führungspunkte der Hutablage jeweils ein über einen der Führungslenker angesteuertes Führungsgestänge zugeordnet wird.

Von den in Längsrichtung des Fahrzeuges beabstandeten Führungslenkern wirkt zweckmäßigerweise der vordere mit dem Führungsgestänge zusammen, das dem ersten Führungspunkt zugeordnet ist, der in Richtung des Längsversatzes der Hutablage zwischen der ersten und der zweiten Schließlage gegenüber dem zweiten Führungspunkt der Hutablage versetzt ist, so daß durch Blockieren dieses Führungsgestänges der erste Führungspunkt zur lagefesten Drehachse wird. Diese Blockierung kann im Rahmen der Erfindung in einfacher Weise in Abhängigkeit von der Stellung des vorderen Führungslenkers erreicht werden. Wird der zweite, rückwärtige Führungslenker der Verdeckführung über ein entsprechendes Führungsgestänge mit dem zweiten Führungspunkt der Hutablage gekoppelt, so kann in einfacher Weise die Schwenkbewegung des zweiten Führungslenkers in eine entsprechende Drehbewegung der Hutablage umgesetzt werden, wobei eine dem abgelegten Verdeck entsprechende Endlage des zweiten Führungslenkers, in der dieser nach hinten in Richtung auf den Kofferraum in den Verdeckkasten abgeklappt ist, gleichzeitig zu einer Festlage für den zweiten Führungspunkt führt, in der dieser eine Drehachse für die Hutablage bilden kann, um die die Hutablage nach Freigabe des ersten Führungspunktes schwenken kann.

Diese Freigabe kann in Abhängigkeit von der Stellung des ersten Führungslenkers selbsttätig erreicht werden, wenn dieser erfindungsgemäß mit dem dem ersten Führungspunkt zugeordneten Führungsgestänge derart zusammenwirkt, daß dieses - bezogen auf eine vorgegebene Lage des ersten Führungslenkers - aus seiner Fixierung gegenüber dem ersten Führungslenker gelöst wird. Ist die Fixierung gelöst, so kann erfindungsgemäß die Abstützung des der Verdecksteuerung zugeordneten Stellantriebes, beispielsweise eines Arbeitszylinders gegen dieses Führungsgestänge genutzt werden, um die Hutablage um deren zweiten Führungspunkt als Schwenkachse zu verschwenken, wobei der Stellantrieb im Rahmen der erfindungsgemäßen Konstruktion für diese Verstellung der Hutablage die gleiche Stellrichtung beibehalten kann, die für die Umstellung des Verdeckes aus seiner geschlossenen Lage in seine geöffnete, im Verdeckkasten abgelegte Lage notwendig war.

Während bei der Verstellbewegung für das Verdeck der Stellantrieb gegen das blockierte erste Führungsgestänge abgestützt war, also einen dem Führungsgestänge zugeordneten Festpunkt hatte, und das Verdeck unter der Wirkung seiner Massekräfte, oder zumindest unterstützt durch diese in seine Ablagestellung abgesenkt wird, ist nunmehr der Festpunkt dem abgelegten Verdeck bzw. dessen rückwärtigem Führungslenker zugeordnet, wobei die vergleichsweise geringen Verstellkräfte für die Verlagerung der Hutablage in ihre zweite Schließlage durch die Massekräfte des Verdeckes als Reaktionskräfte abgestützt werden können, oder auch durch die Abstützung des Verdeckes in seiner Ablagestellung, also eine Anschlagstellung des Verdeckes, so daß keine zusätzliche Verriegelung erforderlich ist.

Mit der erfindungsgemäßen Ausgestaltung einer Hutablage läßt sich somit eine Steuerung der Hutablage in eine Verdecksteuerung in einfacher Weise integrieren, wobei sich zu Totlagen neigende Führungsstellungen vermeiden lassen und mit einem gemeinsamen Antrieb für die Steuerung des Verdeckes und der Hutablage gearbeitet werden kann. Insbesondere läßt sich die erfindungsgemäße Steuerung der Hutablage auch mit der Verdecksteuerung auf den beiden Fahrzeugseiten in gleicher Ausbildung leicht realisieren, da die erfindungsgemäße Lösung nur wenige zusätzliche Anlenkpunkte gegenüber der Karosserie erforderlich macht und toleranzunempfindlich ist.

Weitere Merkmale der Erfindung ergeben sich aus den Ansprüchen. Ferner wird die Erfindung nachfolgend anhand von Ausführungsbeispielen näher erläutert, wobei,
- Figur 1: in stark schematisierter Darstellung einen Ausschnitt eines Fahrzeuges mit einem abklappbaren Verdeck zeigt, dessen Verdeckführung nur in den Grundzügen gezeigt ist,
- Figur 2: eine vereinfachte und schematisierte Seitenansicht einer Steuerung einer Hutablage gemäß Figur 1 in einer ersten Ausführungsform und in Verbindung mit einer teilweise vereinfacht dargestellten Führung für ein als Hardtop ausgebildetes Verdeck in einer Grundstellung, in der das Verdeck geschlossen ist,
- Figur 3: eine Schnittdarstellung, vergrößert, schematisiert und im Hinblick auf die Verdeutlichung der funktionalen Zusammenhänge abgewandelt, entsprechend der Schnittlinie III-III in Figur 2 durch die Steuerung der Hutablage gemäß Figur 2,
- Figur 4: eine Übergangsphase, in der die Hutablage gemäß Figur 2 und das Verdeck mit den zugeordneten Führungs- und Antriebselementen bei halbgeöffnetem Verdeck dargestellt sind,
- Figur 5: eine weitere Übergangsstellung, im Anschluß an die Stellung gemäß Figur 4 beim Öffnen des Verdeckes, wobei der angedeutete vordere Dachteil sich an der geöffneten Hutablage vorbeibewegt,
- Figur 6: eine weitere Übergangsstellung in der Steuerung der Hutablage gemäß Figur 2, wobei das Verdeck nunmehr seine Endlage im Verdeckkasten (Ablagestellung) des Fahrzeuges erreicht hat, so daß der Schließvorgang für die Hutablage durchgeführt werden muß,
- Figur 7: der Beginn des Schließvorganges für die Hutablage gemäß Figur 2 mit Überführung der Hutablage in ihre zweite Schließstellung, wobei der Stellantrieb seine Bewegungsrichtung beibehält und die Steuerung der Hutablage aus ihrer Verriegelung gegenüber der Steuerung des Verdeckes gelöst wird,
- Figur 8: eine weitere Zwischenstellung im Schließvorgang der Hutablage gemäß Figur 2 bei abgelegtem Verdeck,
- Figur 9: die Endstellung der Hutablage gemäß Figur 2, in der die Hutablage den Zugang zum Verdeckkasten bei abgelegtem Verdeck überdeckt, und
- Figur 10: bezogen auf eine der Darstellung gemäß Figur 2 entsprechende Lage eine weitere, im Rahmen der Erfindung liegende Ausgestaltung der Steuerung einer Hutablage.

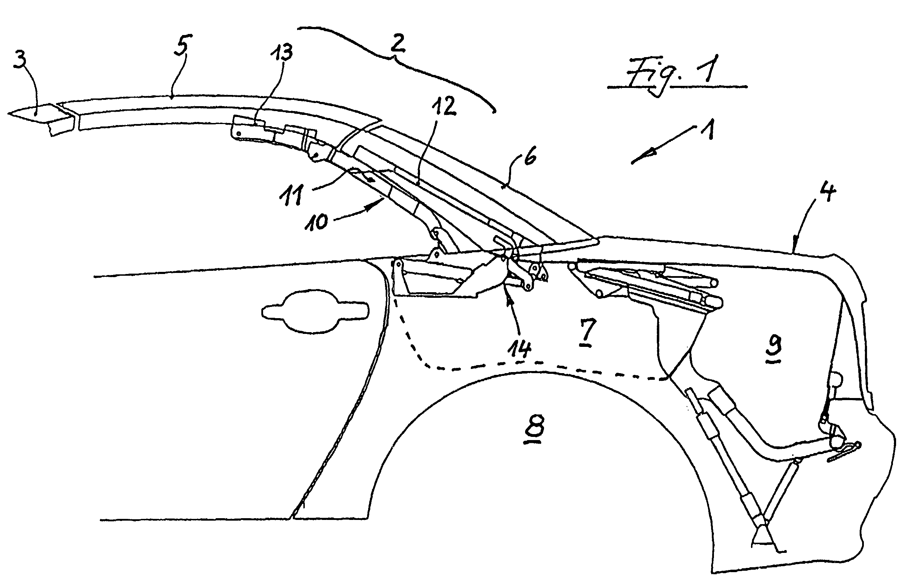

Figur 1 zeigt in schematisierter Darstellung den rückwärtigen Teil eines Fahrzeuges 1, das ein zu öffnendes Verdeck 2 aufweist, welches sich zwischen dem hier angedeuteten Windschutzscheibenrahmen 3 und der heckseitig vorgesehenen Kofferraumabdeckung 4 erstreckt, wobei das Verdeck 2 durch ein sogenanntes Hardtop gebildet ist, welches einen an den Windschutzscheibenrahmen 3 anschließenden Dachteil 5 sowie einen Rückfensterteil 6 umfaßt. Dachteil 5 und Rückfensterteil 6 des Verdeckes 2 sind zum öffnen des Verdeckes 2 in einem Verdeckkasten 7 verstaubar, der sich im wesentlichen oberhalb des Radausschnittes 8 zwischen Fahrzeuginnenraum und Kofferraum 9 erstreckt, wobei ein Teil des Kofferraumes 9 durch den Verdeckkasten 7 in Anspruch genommen wird.

Die Führung von Dachteil 5 und Rückfensterteil 6 ist als Zwangsführung ausgebildet und durch ein Viergelenkgetriebe 10 gebildet, das im wesentlichen nur schematisiert dargestellt ist und das einen vorderen Führungslenker 11, einen rückwärtigen Führungslenker 12 sowie eine Koppel 13 umfaßt, wobei die Führungslenker 11, 12, von denen der Führungslenker 11 hier als zweiarmiger Lenker ausgebildet ist, um karosseriefeste Schwenkachsen verschwenkbar sind. Derartige Führungseinrichtungen sind, über Dachteil 5 und Rückfensterteil 6 verbunden, in symmetrischer Anordnung auf beiden Seiten des Fahrzeuges 1 vorgesehen und umfassen jeweils auch einen Stellantrieb 14, der durch einen Stellzylinder veranschaulicht ist.

Wird das Verdeck 2 im Verdeckkasten 7 abgelegt, so bedingt der Bewegungsablauf des Viergelenkgetriebes 10, daß in der abgelegten Position der Rückfensterteil 6 auf dem Rücken liegt, also mit seiner bei geschlossenem Verdeck dem Fahrzeuginnenraum zugewandten Innenseite nach oben, und vom Dachteil 5 in seiner Normalposition, also mit nach oben und außen liegender Dachhaut überdeckt ist.

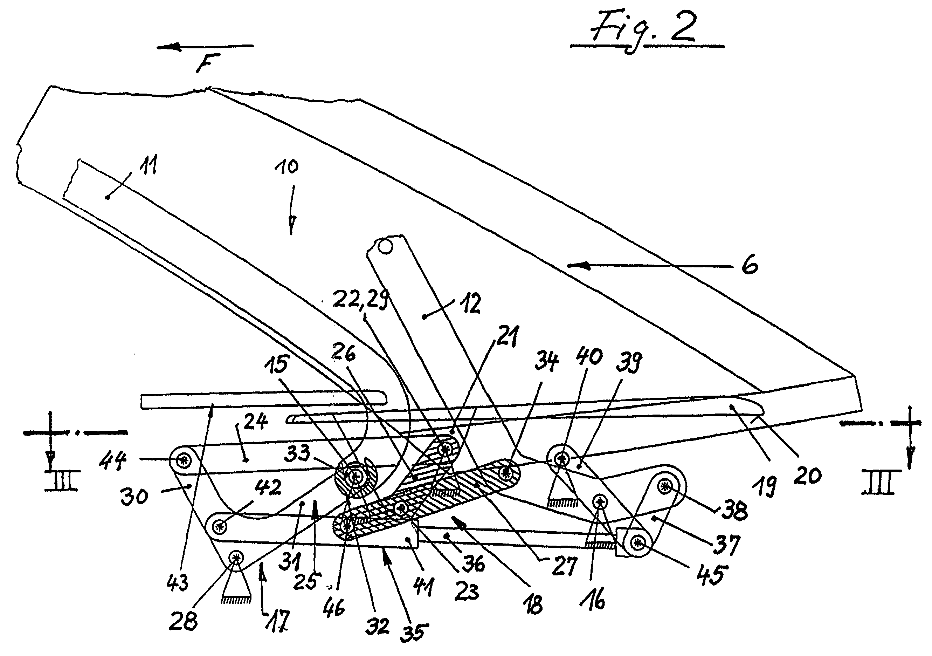

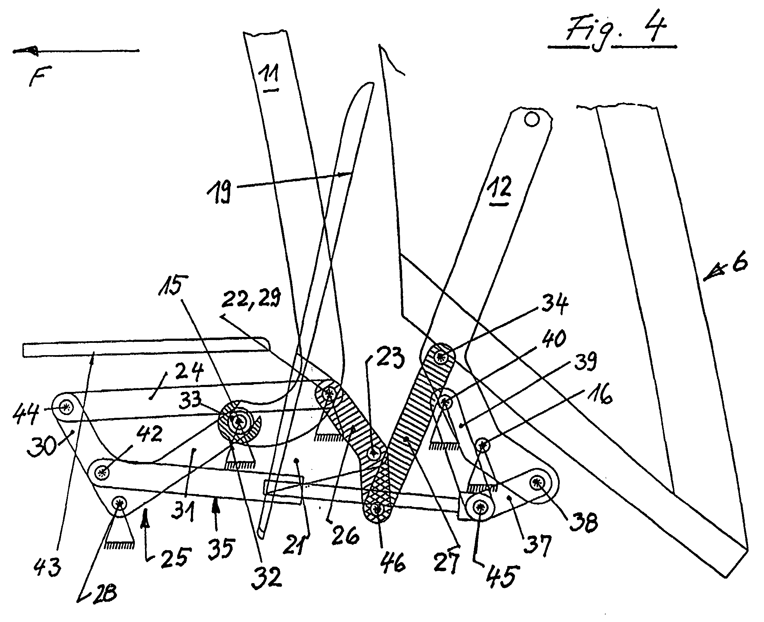

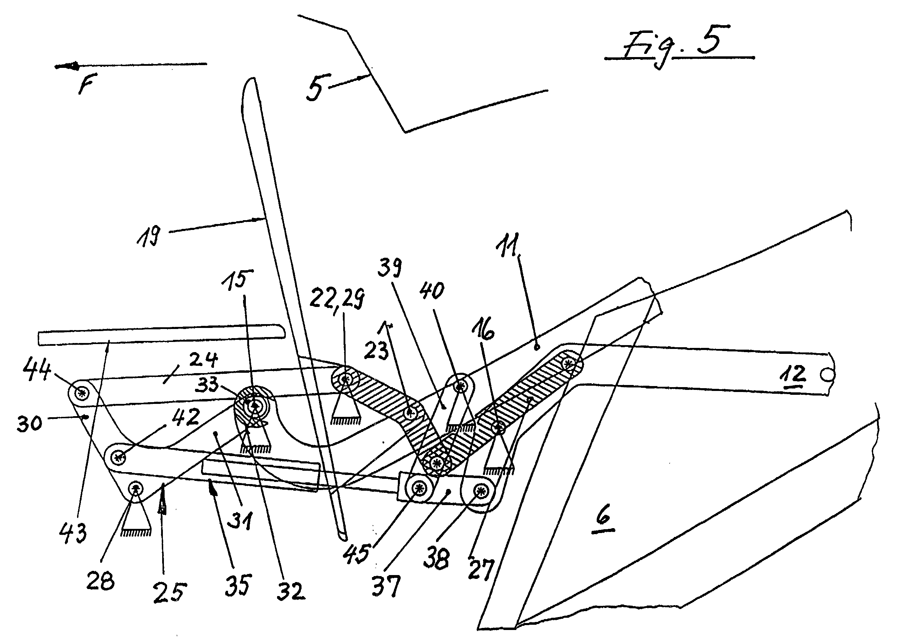

Das Ein- und Ausfahren des Verdeckes 2 in bzw. aus dem Verdeckkasten 7 bedingt eine nach oben offene Verdeckkastenöffnung, die, im Gestaltungsbeispiel gemäß Figur 1, teilweise durch die Kofferraumabdeckung 4 in deren geschlossenem Zustand überdeckt ist, und teilweise durch eine in Figur 1 nicht dargestellte Hutablage - in den Figuren 2 bis 9 mit 19 bezeichnet -, wobei diese Hutablage 19, bezogen auf das geschlossene Verdeck, den Freiraum zwischen der Innenraumrückwand und dem Rückfensterteil 6 überdeckt. Bezogen auf eine Ausgestaltung gemäß Figur 1 bedeutet dies, daß bei in den Verdeckkasten 7 abgelegtem Verdeck 2 zwischen der Hutablage 19, bezogen auf deren vorbeschriebene Positionierung bei geschlossenem Verdeck 2, und der geschlossenen Kofferraumabdeckung 4 ein Spalt verbleibt, der zusätzlich überdeckt werden muß, wozu die Hutablage 19 im Rahmen der erfindungsgemäßen Lösung längsverschieblich ist.

Erfindungsgemäß erfolgt diese Längsverschiebung in Verbindung mit dem Öffnen und Schließen der Hutablage 19, wie dies beim Versenken des Verdeckes 2 in den Verdeckkasten 7 und beim Ausfahren des Verdeckes 2 aus dem Verdeckkasten 7 erforderlich ist. Weitere Einzelheiten und Merkmale der an sich bekannten Verdeckkonstruktion gemäß Figur 1 ergeben sich aus der DE 44 45 580 C1.

Für die Erläuterung der Erfindung und das nähere Verständnis einer Steuerung einer Hutablage 19 in erfindungsgemäßer Weise dienen, bezogen auf eine erste Ausführungsform, die Figuren 2 bis 9, wobei die Hutablage 19 in Zwangskopplung zum Verdeck 2 angeordnet ist und bei Verschwenken des Verdeckes 2 entsprechend mitgeführt wird. In Ausgestaltung der Erfindung ist ein gemeinsamer Antrieb für Verdeck 2 und Hutablage 19 vorgesehen ist, der unter Beibehalt seiner jeweiligen Vortriebsrichtung, die für den Öffnungs- und den Schließvorgang entgegengesetzt ist, jeweils den Öffnungs- bzw. Schließvorgang durchlaufend bewirkt.

In Figur 2 sind von dem dem Dach zugeordneten Viergelenkgetriebe 10 nur der vordere Führungslenker 11 und der rückwärtige Führungslenker 12 veranschaulicht. Vom weiteren Verdeck ist nur der Rückfensterteil 6 schematisch angedeutet.

Den Bestandteile des Viergelenkgetriebes 10 bildenden, symmetrisch für beide Fahrzeugseiten vorgesehenen vorderen Führungslenkern 11 und rückwärtigen Führungslenkern 12 sind, wie in der schematisierten Darstellung gemäß Figur 2 erkennbar, jeweils karosseriefeste Schwenkachsen zugeordnet. Die Schwenkachse für den vorderen Führungslenker 11 ist mit 15 und die Schwenkachse für den rückwärtigen Führungslenker 12 mit 16 bezeichnet.

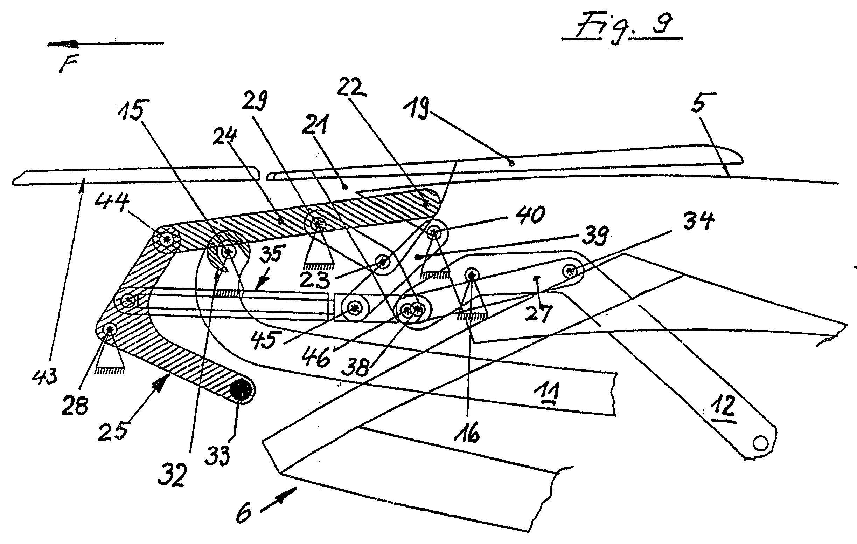

Gekoppelt mit den Führungslenkern 11 und 12 sind jeweils Führungsgestänge 17 und 18, die ihrerseits die Hutablage 19 steuern, welche in Figur 2 in ihrer bezogen auf das geschlossene Verdeck 2 abgestimmten vorderen, ersten Schließlage gezeigt ist, wobei vom Verdeck in Figur 2 nur der Rückfensterteil 6 gezeigt ist, der im geschlossenen Zustand des Verdeckes 2 mit seinen seitlichen Begrenzungen die C-Säule des Fahrzeuges bildet. Die entsprechende, zweite Schließlage der Hutablage 19 ist in Figur 9 veranschaulicht, wobei der Vergleich der Figuren 2 und 9 zeigt, daß die zweite Schließlage, die bei geöffnetem Verdeck gegeben ist, eine nach hinten versetzte rückwärtige Schließlage ist, so daß die Hutablage 19 in dieser zweiten Schließlage den Spaltbereich im Zugang zum Verdeckkasten 7 überdecken kann, der bei geschlossenem Verdeck 2 vom Rückfensterteil 6 abgedeckt und ausgefüllt ist.

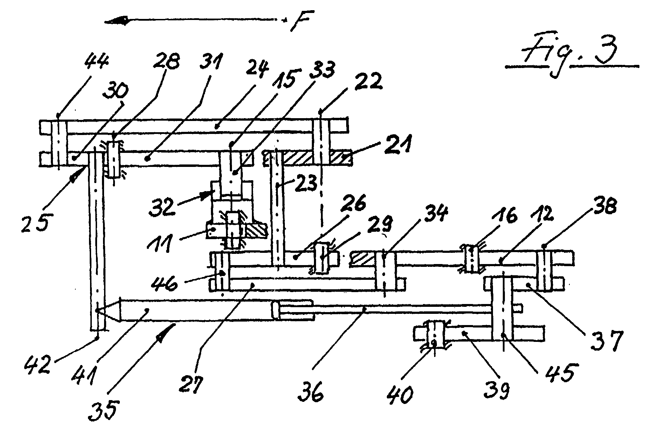

Nachfolgend wird, bezogen auf das Ausführungsbeispiel gemäß Figuren 2 bis 9, zunächst der grundsätzliche Aufbau der Führungsgestänge 17 und 18 in Zuordnung zur Hutablage 19 beschrieben, wobei Figur 3 ergänzend veranschaulicht, wie die einzelnen Hebel und Lenker der Führungsgestänge 17 und 18 und des Viergelenkgetriebes 10 in Zuordnung zur Hutablage 19 zu deren Antrieb und Führung zusammenwirken. Der Hutablage 19 vorgelagert - im Übergang zum Fahrzeuginnenraum - ist eine Verkleidung 43, die von der Hutablage 19 in ihrer ersten Schließlage teilweise untergriffen ist.

Die Hutablage 19 ist an ihrer Unterseite, d.h. ihrer in den Schließlagen dem Verdeckkasten 7 zugewandten Seite 20, den Führungsgestängen 17 und 18 zugeordnet mit einer Konsole 21 versehen, die, in Höhenrichtung beabstandet, d.h. in verschiedenem Abstand zur Unterseite 20 der Hutablage 19, einen ersten Führungspunkt 22 und einen zweiten Führungspunkt 23 aufweist, wobei im ersten Führungspunkt 22 das vordere Führungsgestänge 17 und im zweiten Führungspunkt 23 das rückwärtige Führungsgestänge 18 mit der Konsole 21 verbunden ist. Die Führungsgestänge 17 und 18 sind jeweils durch ein Hebelpaar gebildet, wobei die Hebel des Führungsgestänges 17 mit 24 und 25 und die Hebel des Führungsgestänges 18 mit 26 und 27 bezeichnet sind. Von den Hebeln 25, 24; 26, 27 jedes Hebelpaares 17 und 18 ist jeweils einer karosseriefest angelenkt, nämlich für das Führungsgestänge 17 der Hebel 25 und für das Führungsgestänge 18 der Hebel 26. Die durch die karosseriefeste Anlenkung bestimmten Drehachsen sind mit 28 und 29 bezeichnet.

Von den Hebeln 24 und 25 ist der um die karosseriefeste Drehachse 28 schwenkbare Hebel 25 als Winkelhebel ausgebildet, dessen Arme 30 und 31 im Ausführungsbeispiel in entgegengesetzten Richtungen schräg nach oben verlaufen, wobei der bezogen auf die Fahrzeuglängsrichtung - die Vorwärtsfahrtrichtung ist in Figur 2 mit F angedeutet - rückwärtige Hebelarm 31 in der Ausgangslage bei geschlossenem Verdeck gemäß Figur 2 an seinem freien Ende über ein Fangmaul 32 des vorderen Führungslenkers 11 konzentrisch zu dessen Schwenkachse 15 gehalten ist. Das Fangmaul 32 nimmt einen seitlich vom Arm 31 abragenden Zapfen 33 (siehe Figur 3) auf und ist nach oben offen, so daß der Arm 31 nicht nach unten ausschwenken kann. Am freien Ende des anderen Armes 30 des Hebels 25 ist der Hebel 24 über eine Gelenkachse 44 angelenkt. Der Hebel 24 erstreckt sich in der dargestellten Ausgangslage im wesentlichen parallel zur Ebene der Hutablage 19 und ist den Arm 31 übergreifend im oberen, ersten Führungspunkt 22 mit der Konsole 21 der Hutablage 19 verbunden.

Dieser erste Führungspunkt 22 liegt in der Ausgangslage gemäß Figur 2 koaxial zur karosseriefesten Drehachse 29 des Hebels 26 des Führungsgestänges 18, der in seinem längsmittleren Bereich im zweiten Führungspunkt 23 mit der Konsole 21 verbunden ist und an dessen anderem Ende der Hebel 27 im Punkt 46 angelenkt ist, der seinerseits in einem Drehpunkt 34 mit dem rückwärtigen Führungslenker 12 verbunden ist.

Der rückwärtige Führungslenker 12 ist über den Stellantrieb 35 beaufschlagt, der für das Verdeck 2 und die Hutablage 19 gemeinsam wirksam ist und der durch einen Stellzylinder gebildet ist. Der hydraulisch oder pneumatisch beaufschlagte Stellzylinder des Stellantriebes 35 beaufschlagt über seine Kolbenstange 36 unter Vermittlung eines Viergelenkes den rückwärtigen Führungslenker 12, wobei die Anlenkung am Führungslenker 12 über eine Stützstrebe 37 erfolgt, die ihrerseits am über die Schwenkachse 16 hinausragenden Ende des rückwärtigen Führungslenkers 12 in Punkt 38 angelenkt ist und die koaxial zur Anlenkung 45 der Kolbenstange 36 über eine Haltestrebe 39 karosseriefest in einem Anlenkpunkt 40 drehbar abgestützt ist.

Gegenüberliegend ist der Stellantrieb 35 über den Zylinder 41 im Anlenkpunkt 42 am Arm 30 des Hebels 25 abgestützt, der seinerseits durch die Lagerung auf der karosseriefesten Drehachse 28 und die Abstützung im Fangmaul 32 lagefest gehalten ist, bis durch Zusammenfahren des Stellantriebes 35 - mit entsprechender Verschwenkung des rückwärtigen Führungslenkers 12 und des über diesen mitgenommenen vorderen Führungslenkers 11 in Richtung auf die Verstaulage des Verdeckes 2 im Verdeckkasten - der vordere Führungslenker 11 eine Schwenklage erreicht, in der die Öffnung des Fangmaules 32 etwa tangential zu einem zur Drehachse 28 konzentrischen Bogen durch die Schwenkachse 15 liegt, derart, daß über die Zugkraftbeanspruchung des Stellantriebes 35 der Hebel 25 den Zapfen 33 aus dem Fangmaul 32 ausfädelt.

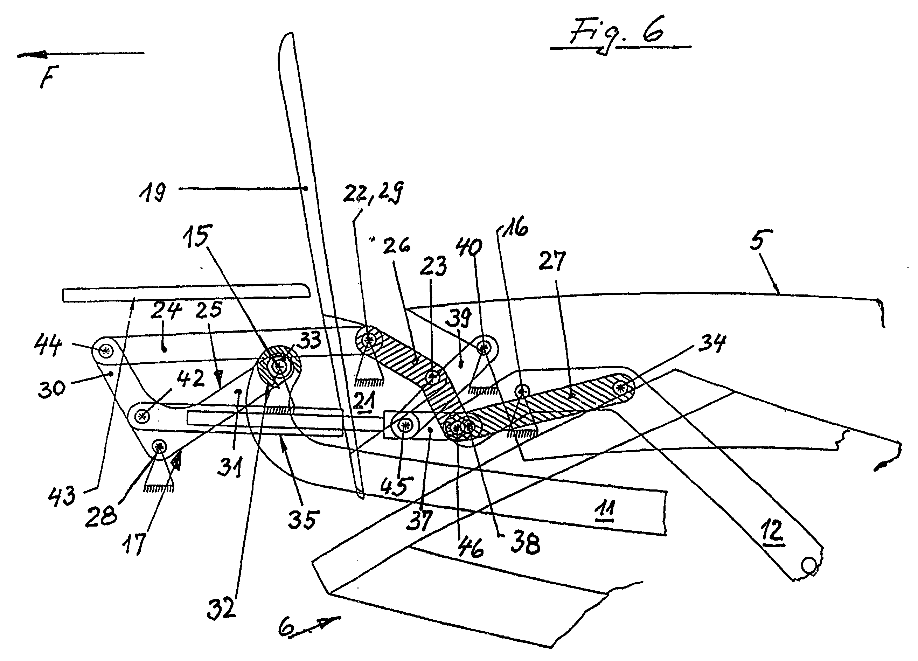

Dieser Ausfädelposition, die in Figur 6 veranschaulicht ist, entspricht die Endstellung des Verdeckes 2 im Verdeckkasten 7. In Richtung auf diese Endstellung wirken die Massekräfte des Verdeckes 2, sobald eine Grenzlage im Öffnungsweg des Verdeckes 2 überschritten ist, und es ist für das Verdeck 2 in seiner Ablagestellung (Endstellung) im Verdeckkasten 7 erfindungsgemäß, wie im Ausführungsbeispiel dargestellt, eine Anschlagstellung gegeben, so daß das Verdeck 2 beim weiteren Verschwenken der Hutablage 19 im Sinne des Schließens - Aufbringen einer Zugkraft über den Stellantrieb 35 - seine Lage beibehält und lediglich die Hutablage 19 im Sinne einer Verlagerung in ihre zweite Schließstellung verlagert wird. Ist diese erreicht, so sind über den Stellantrieb 35 beide Verschwenkpartner - Hutablage 19 und Verdeck 2 - in ihrer Endlage bei geöffnetem Verdeck 2 gehalten, wobei auch der Hutablage 19 oder dem zugehörigen Führungsgestänge 17 ein diese Endlage bestimmender Anschlag zweckmäßigerweise zugeordnet sein kann, was hier nicht weiter dargestellt ist.

Bei der erfindungsgemäßen Lösung wird von dem Gedanken Gebrauch gemacht, daß die höhenversetzte Lage des ersten Führungspunktes 22 und des zweiten Führungspunktes 23 und eine wechselseitige Nutzung dieser Führungspunkte als Drehachsen Dreh- und Schwenkbewegungen der Hutablage 19 ermöglicht, wobei durch Verschwenken des einen der Führungspunkte, hier des Führungspunktes 23 um den Führungspunkt 22 als Drehachse für den Führungspunkt 23 eine Ausgangslage als Drehachse geschaffen werden kann, die bei durch die Drehung um den ersten Führungspunkt 22 als Drehachse erreichter, translatorisch versetzter Lage für den zweiten Führungspunkt 23 und dessen Nutzung als Drehachse zu einer Längsverschiebung der Hutablage 19 in Verbindung mit deren Verschwenken führt.

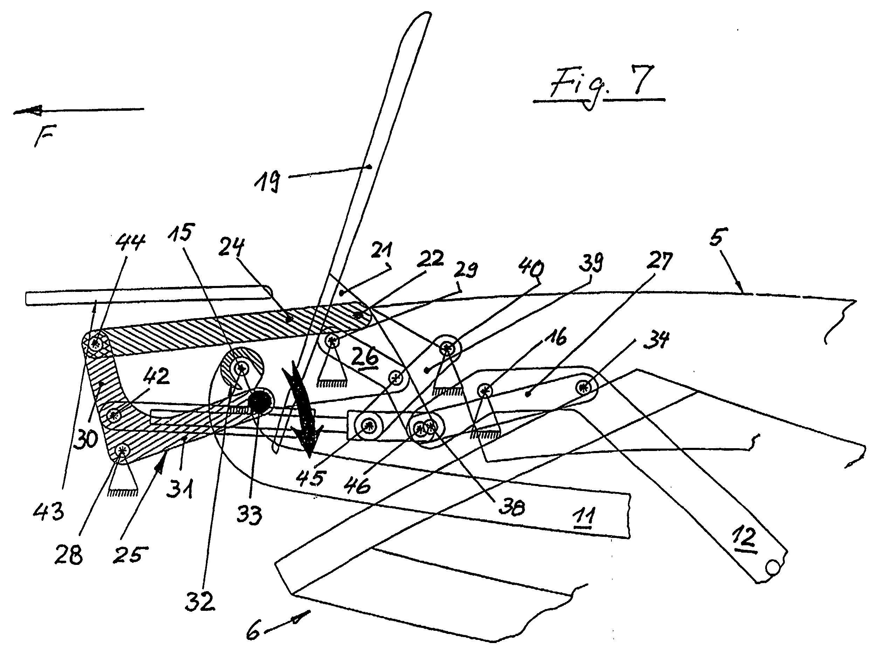

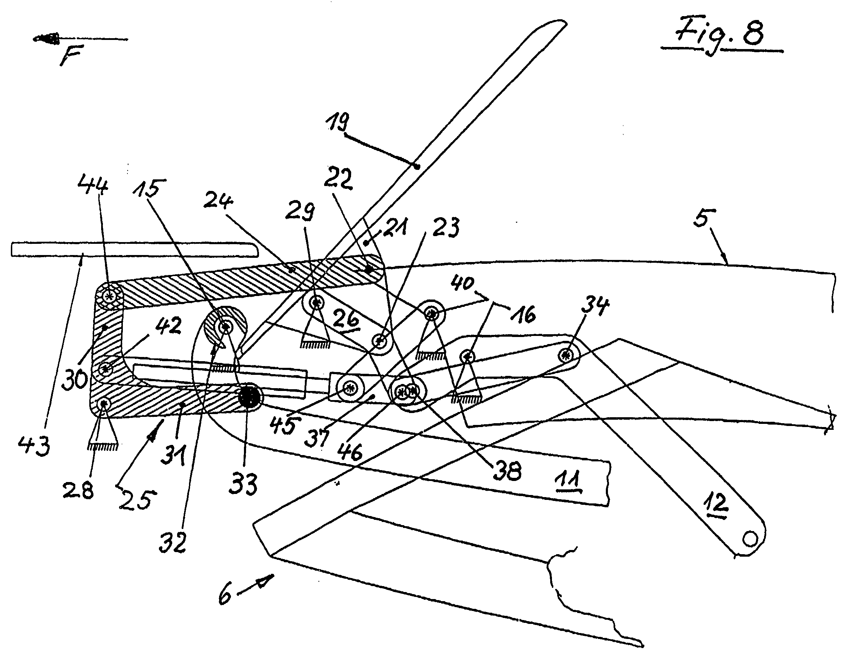

Den entsprechenden Ablauf veranschaulichen die Figuren 2 bis 9, wobei mit Figur 9 die Endlage mit abgelegtem Verdeck 2 veranschaulicht ist. Wird aus dieser Endlage das Schließen des Verdeckes 2 eingeleitet, so ergibt sich ein gegenläufiger Ablauf, wobei durch Ausfahren des Stellantriebes 35 - bei Abstützung gegen die Massekraft des Verdeckes 2 - zunächst die Hutablage 19 angehoben wird (Figur 8), im Verlauf des weiteren Anhebens (Figur 7) der Hebel 25 des Führungsgestänges 17 in Richtung auf das Fangmaul 32 des nach wie vor in der abgesenkten Ruhelage befindlichen vorderen Führungslenkers 11 verschwenkt wird (Figur 7) und schließlich der Zapfen 33 in das Fangmaul 32 eingefädelt wird (Figur 6). Damit ist, bei umgekehrtem Ablauf, wiederum die Ausgangsstellung des Führungsgestänges 17, nunmehr gemäß Figuren 6 bis 2 erreicht, in der über das Führungsgestänge 17 der erste Führungspunkt 22 als Drehachse fixiert ist, um den der zweite Führungspunkt 23 über den Hebel 26 des Führungsgestänges 18 geschwenkt wird, womit beim weiteren Ausfahren des Stellantriebes 35 das Verdeck 2 aus dem Verdeckkasten 7 angehoben und in Schließrichtung verschwenkt wird. Hierbei eilt die Schließbewegung des Verdeckes 2 der Schließbewegung der Hutablage 19 bezogen auf deren Überführung in die erste Schließlage (Figur 2) voraus.

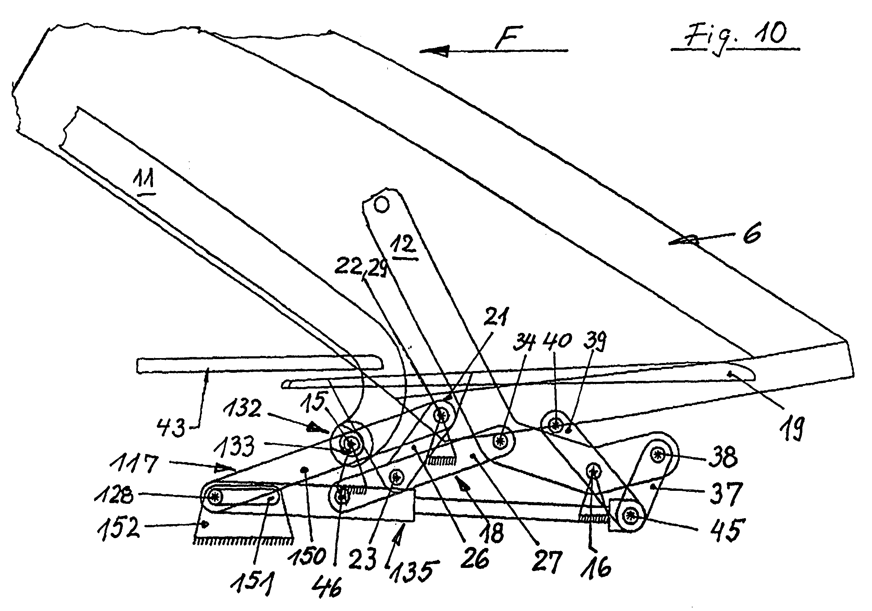

Figur 10 zeigt eine weitere Ausgestaltungsform gemäß der Erfindung, wobei diese Ausgestaltungsform jener gemäß Figuren 2 bis 9 weitgehend entspricht, so daß auch weitgehend gleiche Bezugszeichen Verwendung finden können. Insbesondere ist auch die Grundfunktion der erfindungsgemäßen Steuerung einer Hutablage gemäß Figuren 1 bis 9 bei der Ausgestaltungsform gemäß Figur 10 gegeben, weswegen auf die diesbezüglichen Ausführungen zu Figuren 2 bis 9 ausdrücklich Bezug genommen wird.

Analog zu den Figuren 2 bis 9 umfaßt die Verdeckführung den vorderen Führungslenker 11 und den rückwärtigen Führungslenker 12, und es ist mit der Verdeckführung die Führung und Steuerung für die Hutablage 19 verbunden, welche durch Führungsgestänge gebildet ist, von denen das rückwärtige, mit dem Führungslenker 12 verbundene Führungsgestänge mit 18 bezeichnet ist und die gleiche Ausbildung und Anordnung wie in Figuren 2 bis 9 hat. Das vordere Führungsgestänge ist im vorderen Führungslenker 11 zugeordnet, weicht aber vom Führungsgestänge 17 gemäß Figuren 2 bis 9 ab und ist hier insgesamt mit 117 bezeichnet. Das vordere Führungsgestänge 117 ist durch einen Hebel 150 gebildet, der einerseits im ersten Führungspunkt 22 mit der Konsole 21 der Hutablage 19 verbunden ist und der an seinem anderen Ende über eine Drehachse 128 in einer Langlochführung 151 einer karosseriefesten Anlenkung 152 geführt und gehalten ist.

Wie bei der Ausgestaltung gemäß Figuren 2 bis 9 ist der Stellantrieb, nunmehr mit 135 bezeichnet, gegen das vordere Führungsgestänge 117 abgestützt, wobei diese Abstützung im Rahmen der Erfindung bevorzugt koaxial zur Drehachse 128 am Hebel 150 erfolgt, also beispielsweise in hier nicht näher gezeigter Weise gegen einen Zapfen, der die Drehachse 128 bildet und über den der Stellantrieb 135 und der Hebel 150 in der Langlochführung 151 gemeinsam abgestützt sind.

Analog zum Führungsgestänge 17 gemäß Figuren 2 bis 9 ist das Führungsgestänge 117 über eine lösbare Kupplung mit dem vorderen Führungslenker 11 verbunden, wobei diese Verbindung über einen im längsmittleren Bereich des Hebels 150 angeordneten seitlich zum Hebel 150 auskragenden Zapfen 133 erfolgt, der über ein dem Führungslenker 11 zugeordnetes Fangmaul 132 koaxial zur Schwenkachse 15 des vorderen Führungslenkers 11 zu fixieren ist und der vom Fangmaul 132 nur in einer Schwenklage des vorderen Führungslenkers 11 freigegeben wird, die, analog zu Figuren 7 bis 9, der im Verdeckkasten 7 abgelegten Stellung des Verdeckes 2 entspricht.

Für den Schwenkvorgang des Verdeckes 2 bis in die im Verdeckkasten abgelegte Lage gemäß Figur 6 ist der Zapfen 133 also im Fangmaul 132 gefaßt und gehalten und bei einer der Figur 6 funktional entsprechenden Ausgangsstellung für die Freigabe des Zapfens 133 nimmt das Fangmaul 132 eine Stellung ein, in der die Fangmaulöffnung im wesentlichen in Richtung auf den ersten Führungspunkt 22 gerichtet ist. Ist diese Stellung als Ausgangsstellung erreicht, so ist das Verdeck 2 im Verdeckkasten 7 abgelegt und es kann die Hutablage 19 analog zur Darstellung gemäß Figur 7 in ihre zweite Schließlage (also in die Lage gemäß Figur 9) überführt werden. Da hierzu, wie anhand der Figuren 2 bis 9 erläutert, der den Stellantrieb 135 bildende Zylinderkolbentrieb weiter zusammengefahren wird, kann der Zapfen 133, bei gleichzeitiger Verschiebung der Drehachse 128 in Richtung auf ihre rückwärtige Endlage in der Langlochführung 151, aus dem Fangmaul 132 ausfädeln, wobei im wesentlichen eine Verschiebung des Hebels 150 in seiner Längsrichtung stattfindet, da der die Anlenkung des Hebels 150 an der Konsole 21 bildende erste Führungspunkt 22 gleichzeitig um den zweiten Führungspunkt 23 schwenkt.

Aus der auf diesem Weg erreichten zweiten Schließlage ist die Hutablage 19 beim Öffnen in Gegenrichtung zunächst in eine Öffnungslage verschwenkbar, wobei der Stellantrieb 135 nunmehr ausgefahren wird und in Verbindung mit dem Ausfahren der den Zapfen 133 tragende Hebel 150 über den Stellantrieb 135 in eine vordere Endlage verschoben wird, in der die Drehachse 128 in der Langlochführung 151 ihre vordere, in Figur 10 gezeigte Anschlagstellung einnimmt. In Verbindung mit dieser Längsverschiebung gleitet der Zapfen 133 wieder in das Fangmaul 132, und erst wenn die dadurch erreichte Fangstellung erreicht ist, führt das weitere Ausfahren des Stellantriebes 135 zu einem Verschwenken der Führungslenker 11 und 12 in Richtung auf ihre vordere Endlage, in der das Verdeck 2 geschlossen ist. Hierbei ist der Hebel 150 über den Zapfen 133 koaxial zur Achse 15 drehbar gehalten und gleichzeitig über die Drehachse 128 in der Langlochführung 151 geführt, wobei die Langlochführung 151 eine Verschwenkung um die Achse 15 nicht zuläßt, so daß für den Hebel 150 eine fixierte, karosseriefeste Lage gegeben ist, mit der Folge, daß der erste Führungspunkt 22 eine Festachse bildet, um die der zweite Führungspunkt 23 verschwenkt wird, und zwar zur Schwenkrichtung des Verdeckes 2 in die vordere, geschlossene Lage gegenläufig in seine erste Schließlage.

Wie die Darstellung gemäß Figur 10 zeigt erbringt die dort verwendete Konstruktion einen besonders einfachen Aufbau mit einer sehr schlanken und flachen Bauweise, wobei bezogen auf die geschlossene Lage des Verdeckes 2 für den das vordere Führungsgestänge 117 bildenden Hebel 150 eine zumindest im wesentlichen parallele Lage zum Hebel 27 des rückwärtigen Führungsgestänges 18 gegeben ist, und beide Hebel 117, 27 bezogen auf die Zeichnungsebene in geringem Abstand übereinander angeordnet werden können. Da über den Stellantrieb 135 zudem die Umstellung zwischen den beiden Endlagen in der Langlochführung 151 nur in Verbindung mit der Verschwenkung der Hutablage 19 zwischen der Öffnungsstellung und der zweiten Schließstellung bzw. der zweiten Schließstellungen der Öffnungsstellung erfolgt, hat der durch die Langlochführung 151 gegebene Freiheitsgrad auch keine nachteiligen Auswirkungen auf die Führung des Verdeckes 2 zwischen dessen Schließ- und Öffnungslage sowie die Sicherung des Verdeckes 2 in diesen Lagen. Selbstverständlich ist es im Rahmen der Erfindung aber auch möglich, eine zusätzliche Verriegelung oder Sicherung für die Drehachse 128 in der Langlochführung 151 in jeder von deren Endstellungen vorzusehen, obwohl der Stellantrieb 135, der bevorzugt durch einen Stellzylinder gebildet ist, auch seinerseits entsprechend verriegelt werden kann.

Wie die Zeichnungen veranschaulichen wird mit der Erfindung eine Lösung angeboten, die mit konstruktiv einfachen Mitteln einen flach und schlank bauenden Antriebsverbund für Verdeck 2 und Hutablage 19 ermöglicht, wobei der Stellantrieb 35 bzw. 135 unmittelbar zwischen Elementen der Verdeck- bzw. Hutablagensteuerung wirksam ist, so daß von der Karosserie in Verbindung mit der Verstellung von Verdeck 2 und Hutablage 19 nur geringe Kräfte aufzunehmen sind.

Im Hinblick auf die Erfindung erweisen sich dabei Maßverhältnisse für die Führungsgestänge 17 bzw. 117 und 18 sowie deren Anlenkungen zur Hutablage 19 als zweckmäßig, wie sie den Zeichnungen zu entnehmen sind, weshalb diese Maßverhältnisse eine erfindungsgemäß besonders zweckmäßige Ausgestaltung bedeuten.

Besonders vorteilhaft macht sich im Rahmen der Erfindung auch bemerkbar, daß die Stellrichtung des Stellantriebes 35 bzw. 135 für den gesamten Verstellvorgang sowohl beim öffnen wie auch beim Schließen des Verdeckes 2 die gleiche ist, und zwar bei integrierter Hutablagensteuerung, wobei die Stellkräfte für das Öffnen oder Schließen des Verdeckes nicht über die Hutablagensteuerung aufgenommen werden müssen, obwohl die Stellvorrichtung 35 bzw. 135 an einem Element der Hutablagensteuerung unmittelbar angreift, nämlich dem Hebel 25 bzw. 150 des Führungsgestänges 17 bzw. 117.

Aus Sicherungsgründen kann es im Rahmen der Erfindung zweckmäßig sein, den Übergang auf die Steuerung der Hutablage nach Ablegen des Verdeckes, bzw. umgekehrt von der Steuerung der Hutablage auf das Anheben des Verdeckes beim Schließen desselben daraufhin zu überwachen, ob die Freigabe bzw. die Arretierung des Führungsgestänges 17 bzw. 117 durch Auslaufen des Zapfens 33 bzw. 133 aus dem Fangmaul 32 bzw. 132 oder umgekehrt, durch Einlaufen des Zapfens 33 bzw. 133 in das Fangmaul 32 bzw. 132 erreicht ist. Eine solche Überwachung kann direkt oder indirekt erfolgen, beispielsweise durch Erfassen der Lage des Verdeckes, oder dadurch, daß dem Hebel 25 bzw. 150 zumindest ein Endanschlag zugeordnet wird oder auch über eine entsprechende Sensorik. Eine solche Überwachung der Funktionssicherheit könnte insbesondere bei Fahrzeugen geringerer Verwindungssteifigkeit zweckmäßig sein, wenn diese Fahrzeuge auf unebenem Gelände abgestellt werden.

Insgesamt zeichnet sich die Erfindung dadurch aus, daß die Hutablage mit der Gesamtkinematik ohne zusätzlichen Steueraufwand vollständig und mit beträchtlicher Restkraft in ihre jeweilige Anfangs- bzw. Endstellung bewegt wird, wobei die Gewichtskraft des Verdeckes im Rahmen einer solchen Steuerung in vorteilhafter Weise genutzt wird, um den Gesamtaufwand zu reduzieren.

Die zum Verständnis der Erfindung beigefügte Figur 3 dient nicht dem Zweck, die lagekorrekte Zuordnung der einzelnen Lenker und Hebel der Führungen für Verdeck und Hutablage entsprechend den Figuren 2 und 4 bis 9 zu veranschaulichen, sondern vielmehr nur deren funktionales Zusammenwirken. Dementsprechend sind die in dieser Figur dargestellten Größenverhältnisse keineswegs maßstäblich, ebensowenig wie die Lage der Teile zueinander der tatsächlichen, konstruktiven Lage entspricht.

## Patentansprüche

1. Hutablage für Fahrzeuge mit abklappbarem Verdeck (2) und mit einem das geöffnete, abgelegte Verdeck (2) aufnehmenden Verdeckkasten (7), die ausgehend von einer bei geschlossenem Verdeck (2) gegebenen ersten Schließlage über eine Öffnungslage in eine bei geöffnetem und im Verdeckkasten (7) abgelegten Verdeck (2) gegebene zweite, in Längsrichtung des Fahrzeuges (1) versetzte Schließlage überführbar ist,
**dadurch gekennzeichnet,**
**daß** die Hutablage (19), bezogen auf ihre Schließlagen, zwei verdeckkastenseitig gelegene, quer zur Ebene der Hutablage (19) beabstandete Führungspunkte (22, 23) aufweist, von denen der eine, erste Führungspunkt (22) in der Öffnungsphase des Verdeckes (2) eine Drehachse für den anderen, zweiten, in Richtung des Längsversatzes der Hutablage (19) verschwenkbaren Führungspunkt (23) und der zweite, um den ersten Führungspunkt (22) verschwenkbare Führungspunkt (23) bei abgelegtem Verdeck (2) zur Überführung der Hutablage (19) in ihre zweite Schließlage die in Längsrichtung versetzte Drehachse für den ersten Führungspunkt (22) bildet.

2. Hutablage nach Anspruch 1,
**dadurch gekennzeichnet,**
**daß** die Führungspunkte (22, 23) in ihrer Funktion als Drehachse jeweils lagefest und in Abhängigkeit von der Führung des Verdeckes (2) mechanisch zwangsgeführt sind.

3. Hutablage nach Anspruch 1 oder 2,
**dadurch gekennzeichnet,**
**daß** die Führungspunkte (22, 23), bezogen auf die geschlossene Hutablage (19), in Längsrichtung des Fahrzeuges gegeneinander versetzt sind und daß von den Führungspunkten (22, 23), bezogen auf die erste Schließlage der Hutablage (19), der erste Führungspunkt (22) einen oberen, der Hutablage (19) näher liegenden Führungspunkt bildet, der in Richtung des Längsversatzes zwischen erster und zweiter Schließlage der Hutablage (19) gegenüber dem zweiten, unteren, zur Hutablage (19) entfernteren Führungspunkt (23) versetzt ist.

4. Hutablage nach einem oder mehreren der vorhergehenden Ansprüche,
**dadurch gekennzeichnet,**
**daß** bezogen auf ein abklappbares Verdeck mit zwei um karosseriefeste, in Längsrichtung des Fahrzeuges beabstandete Drehachsen (15, 16) verschwenkbaren und miteinander gekoppelten Führungslenkern (11, 12) jedem der Führungspunkte (22, 23) jeweils ein über einen der Führungslenker (11, 12) angesteuertes Führungsgestänge (17, 18 bzw. 117, 18) zugeordnet ist.

5. Hutablage nach Anspruch 4,
**dadurch gekennzeichnet,**
**daß** von den in Längsrichtung des Fahrzeuges (1) beabstandeten Führungslenkern (11, 12) der vordere mit dem vorderen Führungsgestänge (17 bzw. 117) zusammenwirkt, das im ersten Führungspunkt (22) mit der Hutablage (19) verbunden ist.

6. Hutablage nach einem der Ansprüche 4 oder 5,
**dadurch gekennzeichnet,**
**daß** von den in Längsrichtung des Fahrzeuges beabstandeten Führungslenkern (11, 12) der rückwärtige mit dem rückwärtigen Führungsgestänge (18) zusammenwirkt, das im zweiten Führungspunkt (23) mit der Hutablage (19) verbunden ist.

7. Hutablage nach einem der Ansprüche 4 bis 6,
**dadurch gekennzeichnet,**
**daß** ein Führungsgestänge (17 bzw. 18) durch ein Hebelpaar (24, 25 bzw. 26, 27) gebildet ist, von dem ein Hebel (25 bzw. 26) eine karosseriefeste Drehachse (28, 29) aufweist.

8. Hutablage nach Anspruch 7,
**dadurch gekennzeichnet,**
**daß** die karosseriefeste Drehachse (29) des mit dem rückwärtigen Führungslenker (12) verbundenen Führungsgestänges (18), das im zweiten Führungspunkt (23) mit der Hutablage (19) verbunden ist, in der ersten Schließlage der Hutablage (19) zu der durch den ersten Führungspunkt (22) der Hutablage (19) gebildeten Drehachse (22) deckungsgleich ist.

9. Hutablage nach Anspruch 8,
**dadurch gekennzeichnet,**
**daß** der zweite Führungspunkt (23) der Hutablage (19) dem auf der karosseriefesten Drehachse (29) gelagerten Hebel (26) des mit dem rückwärtigen Führungslenker (12) verbundenen Führungsgestänges (18) zugeordnet ist und daß der auf der karosseriefesten Drehachse (29) gelagerte Hebel (26) an seinem dieser Drehachse (29) gegenüberliegenden Ende an dem mit dem rückwärtigen Führungslenker (12) verbundenen Hebel (27) angelenkt ist, derart, daß bezogen auf die erste Schließlage der Hutablage (19) beide Hebel (26, 27) des mit dem rückwärtigen Führungslenker (12) verbundenen Führungsgestänges (18) sich in Richtung auf die Vorderseite des Fahrzeuges erstrecken.

10. Hutablage nach einem oder mehreren der Ansprüche 5 bis 9,
**dadurch gekennzeichnet,**
**daß** der um eine karosseriefeste Drehachse (28) drehbare Hebel (25) des dem vorderen Führungslenker (11) zugeordneten Führungsgestänges (17) im Bereich seines einen Endes an dem anderen Hebel (24) dieses Führungsgestänges (17), der im ersten Führungspunkt (22) der Hutablage (19) mit dieser verbunden ist, angelenkt und im Bereich seines anderen Endes in Abhängigkeit von der Schwenklage des vorderen Führungslenkers (11) über diesen fixierbar ist.

11. Hutablage nach einem oder mehreren der Ansprüche 4 bis 9,
**dadurch gekennzeichnet,**
**daß** das dem vorderen Führungslenker (11) zugeordnete Führungsgestänge (117), das im ersten Führungspunkt (22) mit der Hutablage (19) verbunden ist, bezüglich seiner karosserieseitigen Anlenkung (Drehachse 128) in Abhängigkeit von vorgegebenen Schwenklagen des Verdeckes (2) über den Stellantrieb (135) in Arbeitsrichtung des Stellantriebes (135) begrenzt verlagerbar ist.

12. Hutablage nach Anspruch 11,
**dadurch gekennzeichnet,**
**daß** die karosserieseitige Anlenkung (Drehachse 128) des vorderen Führungsgestänges (117) durch eine in Arbeitsrichtung des. Stellantriebes (135) verschiebbare Drehachse (128) gebildet ist, die in einer karosserieseitigen Längsführung, insbesondere einer Langlochführung (151) gehalten ist.

13. Hutablage nach einem der Ansprüche 11 oder 12,
**dadurch gekennzeichnet,**
**daß** das mit dem vorderen Führungslenker (11) verbundene Führungsgestänge (117) durch einen Hebel (150) gebildet ist, der im ersten Führungspunkt (22) mit der Hutablage (19) verbunden ist und der zwischen der Anlenkung im ersten Führungspunkt (22) und seiner karosserieseitigen Anlenkung (Drehachse 128), insbesondere in seinem längsmittleren Bereich mit dem vorderen Führungslenker (11) über eine im Bereich von dessen karosserieseitiger Drehachse (15) liegende Kupplungseinrichtung (Fangmaul 132) erfaßbar ist.

14. Hutablage nach Anspruch 10,
**dadurch gekennzeichnet,**
**daß** der vordere Führungslenker (11) im Bereich seiner karosserieseitigen Drehachse (15) eine Kupplungseinrichtung (Fangmaul 32) aufweist, über die der um die karosserieseitige Drehachse (28) schwenkbare Hebel (25) des vorderen Führungsgestänges (17) im zugeordneten endständigen Bereich erfaßbar ist.

15. Hutablage nach einem der Ansprüche 13 oder 14,
**dadurch gekennzeichnet,**
**daß** die Kupplungseinrichtung durch ein Fangmaul (32 bzw. 132) gebildet ist.

16. Hutablage nach Anspruch 15,
**dadurch gekennzeichnet,**
**daß** das Fangmaul (32 bzw. 132) den über die Kupplungseinrichtung erfaßbaren und in Bezug auf die Drehachse (15) des vorderen Führungslenker (11) festlegbaren Hebel (25 bzw. 150) bei in dem Verdeckkasten (7) abgelegten Verdeck (2) freigibt.

17. Hutablage nach Anspruch 16,
**dadurch gekennzeichnet,**
**daß** bei um eine fahrzeugfeste Drehachse (28) verschwenkbaren Führungsgestänge (17), das durch das Hebelpaar (24, 25) gebildet ist, die Freigabe der Verbindung zwischen zweitem Hebel (25) und vorderem Führungslenker (11) einer Schwenkrichtung der Hutablage (19) um den zweiten Führungspunkt (23) als Drehachse in Richtung auf ihre zweite Schließlage entspricht.

18. Hutablage nach Anspruch 16,
**dadurch gekennzeichnet,**
**daß** bei einem Führungsgestänge (117), das durch einen in der Langlochführung (151) verschiebbar geführten Hebel (150) gebildet ist, die Freigabe der Verbindung zwischen diesem Hebel (150) und dem vorderen Führungslenker (11) im wesentlichen einer Verschiebung dieses Hebels (150) in Richtung der Längsverschiebung der Hutablage (19) zwischen deren erster und zweiter Schließstellung entspricht.

19. Hutablage nach einem oder mehreren der vorhergehenden Ansprüche,
**dadurch gekennzeichnet,**
**daß** die Hutablage (19) mit dem Verdeck über einen gemeinsamen Stellantrieb (35 bzw. 135) verstellbar ist, der durch ein längenveränderliches Stellelement, insbesondere einen Stellzylinder gebildet ist, der zwischen rückwärtigem Führungslenker (12) und karosserieseitig gelagertem Hebel (25 bzw. 150) des dem vorderen Führungslenker (11) zugeordneten Führungsgestänges (17 bzw. 117) angeordnet ist.

20. Hutablage nach Anspruch 19,
**dadurch gekennzeichnet,**
**daß** der rückwärtige Führungslenker (12) und das dem vorderen Führungslenker (11) zugeordnete, durch ein Hebelpaar (24, 25) gebildete Führungsgestänge (17) bei Verstellung über den gemeinsamen Stellantrieb (35) in Bezug auf ihre karosserieseitigen Drehachsen (16, 28) jeweils den gleichen Drehsinn aufweisen.

## Claims

1. Rear window shelf for vehicles having a folding top (2) which can be folded down and having a folding-top box (7) accommodating the opened, deposited folding top (2), it being possible for the rear window shelf to be transferred from a first closed position, which is provided when the folding top (2) is closed, via an opening position into a second closed position which is offset in the longitudinal direction of the vehicle (1) and is provided when the folding top (2) is opened and deposited in the folding-top box (7), **characterized in that** the rear window shelf (19) has, with regard to its closed positions, two guide points (22, 23) which are placed on the folding-top-box side, are spaced apart transversely with respect to the plane of the rear window shelf (19) and of which the one, first guide point (22) forms, in the opening phase of the folding top (2), a pivot for the other, second guide point (23) which can be pivoted in the direction of the longitudinal offset of the rear window shelf (19), and the second guide point (23), which can be pivoted about the first guide point (22), forms the pivot, which is offset in the longitudinal direction, for the first guide point (22), for transferring the rear window shelf (19) into its second closed position when the folding top (2) is deposited.

2. Rear window shelf according to Claim 1, **characterized in that**, in their function as a pivot, the guide points (22, 23) are in each case fixed in position and are guided in a constrained manner mechanically as a function of the guidance of the folding top (2).

3. Rear window shelf according to Claim 1 or 2, **characterized in that** the guide points (22, 23), with regard to the closed rear window shelf (19), are offset relative to each other in the longitudinal direction of the vehicle, and **in that**, of the guide points (22, 23), with regard to the first closed position of the rear window shelf (19), the first guide point (22) forms an upper guide point which is situated closer to the rear window shelf (19) and is offset relative to the second, lower guide point (23), which is further away from the rear window shelf (19), in the direction of the longitudinal offset between first and second closed positions of the rear window shelf (19).

4. Rear window shelf according to one or more of the preceding claims, **characterized in that**, with regard to a folding top which can be folded down and has two guide links (11, 12) which are coupled to each other and can be pivoted about pivots (15, 16) which are fixed on the bodywork and are spaced apart in the longitudinal direction of the vehicle, each of the guide points (22, 23) is in each case assigned a guide linkage (17, 18 or 117, 18) activated via one of the guide links (11, 12).

5. Rear window shelf according to Claim 4, **characterized in that**, of the guide links (11, 12) which are spaced apart in the longitudinal direction of the vehicle (1), the front one interacts with the front guide linkage (17 or 117) which is connected to the rear window shelf (19) in the first guide point (22).

6. Rear window shelf according to either of Claims 4 and 5, **characterized in that**, of the guide links (11, 12) which are spaced apart in the longitudinal direction of the vehicle, the rear one interacts with the rear guide linkage (18) which is connected to the rear window shelf (19) in the second guide point (23).

7. Rear window shelf according to one of Claims 4 to 6, **characterized in that** a guide linkage (17 or 18) is formed by a pair of levers (24, 25 or 26, 27), one lever (25 or 26) of which has a pivot (28, 29) fixed on the bodywork.

8. Rear window shelf according to Claim 7, **characterized in that** the pivot (29), which is fixed on the bodywork, of the guide linkage (18) which is connected to the rear guide link (12) and is connected to the rear window shelf (19) in the second guide point (23), is congruent, in the first closed position of the rear window shelf (19), with the pivot (22) formed by the first guide point (22) of the rear window shelf (19).

9. Rear window shelf according to Claim 8, **characterized in that** the second guide point (23) of the rear window shelf (19) is assigned to the lever (26) which is mounted on the pivot (29) fixed on the bodywork and belongs to the guide linkage (18) connected to the rear guide link (12), and **in that** the lever (26) which is mounted on the pivot (29) fixed on the bodywork is articulated, at its end lying opposite this pivot (29), on the lever (27) connected to the rear guide link (12), in such a manner that, with regard to the first closed position of the rear window shelf (19), the two levers (26, 27) of the guide linkage (18) connected to the rear guide link (12) extend in the direction of the front side of the vehicle.

10. Rear window shelf according to one or more of Claims 5 to 9, **characterized in that** the lever (25) which can be rotated about a pivot (28) fixed on the bodywork and belongs to the guide linkage (17) assigned to the front guide link (11) is articulated, in the region of its one end, on the other lever (24) of this guide linkage (17), which lever (24) is connected to the rear window shelf (19) in the first guide point (22) thereof and, in the region of its other end, can be fixed above the front guide link (11) as a function of the pivoting position thereof.

11. Rear window shelf according to one or more of Claims 4 to 9, **characterized in that** the guide linkage (117) which is assigned to the front guide link (11) and is connected to the rear window shelf (19) in the first guide point (22) can be displaced to a limited extent with regard to its point of articulation on the bodywork (pivot 128) via the actuating drive (135) in the working direction of the actuating drive (135) as a function of predetermined pivoting positions of the folding top (2).

12. Rear window shelf according to Claim 11, **characterized in that** the point of articulation on the bodywork (pivot 128) of the front guide linkage (117) is formed by a pivot (128) which can be displaced in the working direction of the actuating drive (135) and is held in a longitudinal guide on the bodywork, in particular a slotted guide (151).

13. Rear window shelf according to either of Claims 11 and 12, **characterized in that** the guide linkage (117) connected to the front guide link (11) is formed by a lever (150) which is connected to the rear window shelf (19) in the first guide point (22) and which can be grasped between the point of articulation in the first guide point (22) and its point of articulation on the bodywork (pivot 128), in particular in its longitudinal central region, by the front guide link (11) via a coupling device (gripping mouth 132) situated in the region of its pivot (15) on the bodywork.

14. Rear window shelf according to Claim 10, **characterized in that** the front guide link (11) has, in the region of its pivot (15) on the bodywork, a coupling device (gripping mouth 32) via which the lever (25), which can be pivoted about the pivot (28) on the bodywork and belongs to the front guide linkage (17), can be grasped in the associated end region.

15. Rear window shelf according to either of Claims 13 and 14, **characterized in that** the coupling device is formed by a gripping mouth (32 or 132).

16. Rear window shelf according to Claim 15, **characterized in that** the gripping mouth (32 or 132) releases the lever (25 or 150), which can be grasped via the coupling device and can be secured with regard to the pivot (15) of the front guide link (11), when the folding top (2) is deposited in the folding-top box (7).

17. Rear window shelf according to Claim 16, **characterized in that** in the case of the guide linkage (17) which can be pivoted about a pivot (28) fixed on the vehicle and is formed by the pair of levers (24, 25), the release of the connection between the second lever (25) and front guide link (11) corresponds to a pivoting direction of the rear window shelf (19) about the second guide point (23) as pivot in the direction of its second closed position.

18. Rear window shelf according to Claim 16, **characterized in that** in the case of a guide linkage (117) which is formed by a lever (150) guided displaceably in the slotted guide (151), the release of the connection between this lever (150) and the front guide link (11) corresponds essentially to a displacement of this lever (150) in the direction of the longitudinal displacement of the rear window shelf (19) between its first and second closed positions.

19. Rear window shelf according to one or more of the preceding claims, **characterized in that** the rear window shelf (19) can be adjusted by the folding top via a common actuating drive (35 or 135) which is formed by an adjusting element which can be changed in length, in particular an adjusting cylinder, which is arranged between the rear guide link (12) and lever (25 or 150) which is mounted on the bodywork and belongs to the guide linkage (17 or 117) assigned to the front guide link (11).

20. Rear window shelf according to Claim 19, **characterized in that** the rear guide link (12) and the guide linkage (17) which is assigned to the front guide link (11) and is formed by a pair of levers (24, 25) have the same direction of rotation in each case with regard to their pivots (16, 28) on the bodywork when adjusted via the common actuating drive (35).

## Revendications

1. Plage arrière pour véhicules à capote (2) rabattable et équipés d'un compartiment à capote (7) qui reçoit la capote (2) ouverte rangée, laquelle peut être transférée d'une première position de fermeture définie lorsque la capote (2) est fermée vers une deuxième position de fermeture, décalée dans le sens longitudinal du véhicule (1) définie lorsque la capote (2) est ouverte et rangée dans le compartiment à capote (7) en passant par une position d'ouverture, **caractérisée en ce que** la plage arrière (19), en rapport avec ses positions de fermeture, présente deux points de guidage (22, 23) qui se trouvent du côté du compartiment à capote et qui sont espacés transversalement par rapport au plan de la plage arrière (19), dont le premier point de guidage (22), pendant la phase d'ouverture de la capote (2), constitue un axe de rotation pour l'autre, deuxième point de guidage (23) qui peut pivoter en direction du décalage longitudinal de la plage arrière (19), et le deuxième point de guidage (23), qui peut pivoter autour du premier point de guidage (22) lorsque la capote (2) est déposée afin de transférer la plage arrière (19) dans sa deuxième position de fermeture, constitue l'axe de rotation décalé dans le sens longitudinal pour le premier point de guidage (22).

2. Plage arrière selon la revendication 1, **caractérisée en ce que** les points de guidage (22, 23) dans leur fonction d'axe de rotation sont à chaque fois fixés dans leur position et subissent un guidage forcé mécanique en fonction du guidage de la capote (2).

3. Plage arrière selon la revendication 1 ou 2, **caractérisée en ce que** les points de guidage (22, 23), rapportés à la plage arrière fermée (19), sont décalés l'un par rapport à l'autre dans le sens longitudinal du véhicule et que parmi les points de guidage (22, 23), rapportés à la première position de fermeture de la plage arrière (19), le premier point de guidage (22) constitue un point de guidage supérieur plus proche de la plage arrière (19) qui est décalé dans le sens longitudinal entre la première et la deuxième position de fermeture de la plage arrière (19) par rapport au deuxième point de guidage (23) inférieur, plus éloigné de la plage arrière (19).

4. Plage arrière selon une ou plusieurs des revendications précédentes, **caractérisée en ce que**, rapporté à une capote rabattable munie de deux bras articulés de guidage (11, 12) couplés entre eux et pivotant autour d'axes de rotation (15, 16) fixes sur la carrosserie et espacés dans le sens longitudinal du véhicule, chacun des points de guidage (22, 23) est à chaque fois associé à une tige de guidage (17, 18 ou 117, 18) commandée par le biais de l'un des bras articulés de guidage (11, 12).

5. Plage arrière selon la revendication 4, **caractérisée en ce que** parmi les bras articulés de guidage (11, 12) espacés dans le sens longitudinal du véhicule (1), celui qui se trouve à l'avant agit conjointement avec la tige de guidage avant (17 ou 117) qui est reliée avec la plage arrière (19) dans le premier point de guidage (22).

6. Plage arrière selon la revendication 4 ou 5, **caractérisée en ce que** parmi les bras articulés de guidage (11, 12) espacés dans le sens longitudinal du véhicule, celui qui se trouve à l'arrière agit conjointement avec la tige de guidage arrière (18) qui est reliée avec la plage arrière (19) dans le deuxième point de guidage (23).

7. Plage arrière selon l'une des revendications 4 à 6, **caractérisée en ce qu'**une tige de guidage (17 ou 18) est constituée d'une paire de leviers (24, 25 ou 26, 27) dont l'un des leviers (25 ou 26) présente un axe de rotation fixe sur la carrosserie (28, 29).

8. Plage arrière selon la revendication 7, **caractérisée en ce que** l'axe de rotation fixe sur la carrosserie (29) de la tige de guidage (18) reliée au bras articulé de guidage arrière (12), laquelle est reliée à la plage arrière (19) dans le deuxième point de guidage (23), est coïncident avec l'axe de rotation (22) constitué par le premier point de guidage (22) de la plage arrière (19) dans la première position de fermeture de la plage arrière (19).

9. Plage arrière selon la revendication 8, **caractérisée en ce que** le deuxième point de guidage (23) de la plage arrière (19) est associé au levier (26) logé sur l'axe de rotation fixe sur la carrosserie (29) de la tige de guidage (18) reliée au bras articulé de guidage arrière (12) et que le levier (26) logé sur l'axe de rotation fixe sur la carrosserie (29) est fixé de manière articulée en son extrémité opposée à cet axe de rotation (29) avec le levier (27) relié au bras articulé de guidage arrière (12) de telle manière que, rapporté à la première position de fermeture de la plage arrière (19), les deux leviers (26, 27) de la tige de guidage (18) reliée au bras articulé de guidage arrière (12) s'étendent en direction de l'avant du véhicule.

10. Plage arrière selon une ou plusieurs des revendications 5 à 9, **caractérisée en ce que** le levier (25) qui peut pivoter autour d'un axe de rotation fixe sur la carrosserie (28) est fixé de manière articulée dans la zone de l'une des extrémités de la tige de guidage (17) associée au bras articulé de guidage avant (11) à l'autre levier (24) de cette tige de guidage (17), lequel est relié à celle-ci dans le premier point de guidage (22) de la plage arrière (19) et peut être bloqué dans la zone de son autre extrémité par le bras articulé de guidage avant (11) en fonction de la position de basculement de celui-ci.

11. Plage arrière selon une ou plusieurs des revendications 4 à 9, **caractérisée en ce que** la tige de guidage (117) associée au bras articulé de guidage avant (11) qui est relié à la plage arrière (19) dans le premier point de guidage (22), peut être décalée de manière limitée par le biais du mécanisme de positionnement (135) dans le sens du fonctionnement du mécanisme de positionnement (135) au niveau de son articulation du côté de la carrosserie (axe de rotation 128) en fonction de la position de rotation prédéfinie de la capote (2).

12. Plage arrière selon la revendication 11, **caractérisée en ce que** l'articulation du côté de la carrosserie (axe de rotation 128) de la tige de guidage avant (117) est constituée par un axe de rotation (128) qui peut être décalé dans le sens du fonctionnement du mécanisme de positionnement (135), lequel est maintenu dans un guide longitudinal du côté de la carrosserie, plus précisément un guide à trou oblong (151).

13. Plage arrière selon l'une des revendications 11 ou 12, **caractérisée en ce que** la tige de guidage (117) reliée au bras articulé de guidage avant (11) est constituée d'un levier (150) qui est relié à la plage arrière (19) dans le premier point de guidage (22) et qui peut être saisi entre l'articulation dans le premier point de guidage (22) et son articulation du côté de la carrosserie (axe de rotation 128), plus précisément dans sa zone centrale longitudinale avec le bras articulé de guidage avant (11) par le biais d'un dispositif d'accouplement (fourche de réception 132) qui se trouve dans la zone de son axe de rotation côté carrosserie (15).

14. Plage arrière selon la revendication 10, **caractérisée en ce que** le bras articulé de guidage avant (11) présente dans la zone de son axe de rotation côté carrosserie (15) un dispositif d'accouplement (fourche de réception 32) par le biais duquel le levier (25) pivotant autour de l'axe de rotation côté carrosserie (28) de la tige de guidage avant (17) peut être saisi dans la zone en fin de chaîne correspondante.

15. Plage arrière selon l'une des revendications 13 ou 14, **caractérisée en ce que** le dispositif d'accouplement est constitué par une fourche de réception (32 ou 132).

16. Plage arrière selon la revendication 15, **caractérisée en ce que** la fourche de réception (32 ou 132) libère le levier (25 ou 150) pouvant être saisi par le biais du dispositif d'accouplement et pouvant être bloqué par rapport à l'axe de rotation (15) du bras articulé de guidage avant (11) lorsque la capote (2) est rangée dans le compartiment à capote (7).

17. Plage arrière selon la revendication 16, **caractérisée en ce qu'**avec une tige de guidage (17) pivotante autour d'un axe de rotation (28) fixe du véhicule, laquelle est constituée par la paire de leviers (24, 25), la libération de liaison entre le deuxième levier (25) et le bras articulé de guidage avant (11) correspond à un sens de basculement de la plage arrière (19) autour du deuxième point de guidage (23) faisant office d'axe de rotation en direction de sa deuxième position de fermeture.

18. Plage arrière selon la revendication 16, **caractérisée en ce qu'**avec une tige de guidage (117), laquelle est constituée d'un levier (150) guidé de manière coulissante dans le guide à trou oblong (151), la libération de la liaison entre ce levier (150) et le bras articulé de guidage avant (11) correspond pour l'essentiel à un décalage de ce levier (150) en direction du décalage longitudinal de la plage arrière (19) entre sa première et sa deuxième position de fermeture.

19. Plage arrière selon une ou plusieurs des revendications précédentes, **caractérisée en ce que** la plage arrière (19) peut être positionnée avec la capote à l'aide d'un mécanisme de positionnement commun (35 ou 135), lequel est constitué d'un élément de positionnement à longueur variable, plus précisément un vérin de positionnement, qui est disposé entre le bras articulé de guidage arrière (12) et le levier (25 ou 150) logé du côté de la carrosserie de la tige de guidage (17 ou 117) associée au bras articulé de guidage avant (11).

20. Plage arrière selon la revendication 19, **caractérisée en ce que** le bras articulé de guidage arrière (12) et la tige de guidage (17) constituée d'une paire de leviers (24, 25) et associée au bras articulé de guidage avant (11) présentent chacun le même sens de rotation par rapport à leurs axes de rotation côté carrosserie (16, 28) lors du positionnement par le biais du mécanisme de positionnement commun (35).
